# EUROPEAN PATENT APPLICATION

(11) **EP 3 470 240 A1**
(43) Date of publication of application: **17.04.2019**
(21) Application number: 18199492.2
(22) Date of filing: 10.10.2018
(51) Int. Cl.: B60B 7/02, B60B 7/08, B60B 33/00, B60B 7/00, B60B 7/06

(54) **CASTER WHEEL WITH DEVICE TO PREVENT CONTAMINATION**

(30) Priority: 10.10.2017 IT 201700113970
(71) Applicant: O.G.T.M. Officine Meccaniche S.r.l., 26866 Sant'Angelo Lodigiano (LO) (IT)
(72) Inventor: BAVUSO, Giuseppe, 26866 Sant'Angelo Lodigiano (LO) (IT); TRIVINI, Ruggero, 26866 Sant'Angelo Lodigiano (LO) (IT)
(74) Representative: Brunacci, Marco

(57) **Abstract**

The present invention refer to a twin wheel (1) to prevent the penetration of foreign bodies comprising a central body (2) comprising a pair of rollers (10) connected in a revolving manner to one another wherein each of the lateral walls (3,4) of the central body (2) has a protective annular element (6,7) overhanging transversely towards each roller (10), and that each inner side (11) of the rollers (10) has an annular recess (12) adapted to receive, by shape mating, said protective annular element (6,7).

## Description

The present invention refers to a twin wheel to prevent the penetration of foreign bodies and, in particular, to a self-orientable roller twin wheel with a concave outer profile which prevents the entry of any dirt that may have been collected up during rotation.

In the rest of this description and subsequent claims, a self-orientable twin wheel means a wheel that can be fixed to a support device (e.g. a piece of furniture or a chair) that orientates itself according to the direction of movement of the support device itself.

Generally, a twin wheel is made up of a pair of substantially identical rollers mounted revolving on a shaft or hub which is supported on a central body that can be coupled to a chair by means e.g. of a vertical pin.

It is well known that twin wheels tend to collect dirt during their rotation. Depending on the surface on which the rollers rotate, dirt collection can increase considerably. If, for example, the rollers are used on a fitted carpet, the textile fibers of the latter tend to come off and climb along the inner walls of the rollers, intercepting the hub and affecting its operation in the long term. Even more serious is the case in which the rollers intercept hair or hairs, such as those of carpets, which if they tangle on the hub can also permanently block the rotation thereof.

The Applicant has discovered that by equipping a twin wheel with protective annular elements projecting from the central body and insertable in annular recesses obtained in the rollers, dirt would be prevented from penetrating into the wheel itself while ensuring, at the same time, the protection of the hub.

The present invention therefore relates to a twin wheel to prevent the penetration of foreign bodies having structural and functional characteristics such as to satisfy the aforementioned requirements and at the same time to overcome the drawbacks referred to with reference to the prior art.

This object is achieved by a twin wheel to prevent the penetration of foreign bodies according to claim 1.

Other characteristics and advantages of the twin wheel according to the present invention will become more evident from the description below of a preferred embodiment, illustrated by way of an indicative, but non-limiting example, with reference to the attached drawings, in which:
- Figure 1 shows an exploded perspective view of a twin wheel to prevent the penetration of foreign bodies according to the present invention,
- Figures 2a, 2b show side perspective views of the central body of the twin wheel of Figure 1,
- Figures 3a, 3b show perspective views of the rollers of the twin wheel of Figure 1,
- Figures 4 and 5 show side perspective views of the lateral covering discs according to a first embodiment,
- Figure 6 shows a perspective view of the lateral covering discs according to a second embodiment,
- Figure 7 shows a cross-section view of the twin wheel of Figure 1 in an assembled configuration.

With particular reference to these illustrations, reference numeral 1 globally indicates a twin wheel to prevent the penetration of foreign bodies according to the present invention.

The twin wheel comprises a central body 2 intended to be coupled to a supporting device, such as e.g. a piece of furniture or a chair, and comprises two opposed and parallel lateral walls 3,4 between which a through channel 5 is extended.

Preferably, the central body 2 has a substantially discoidal shape.

The central body 2 has a thickness Sc between 5 mm and 10 mm, preferably 6 mm and is made of metallic material, preferably zamak.

The through channel 5 is obtained in the central body 2 in a position substantially central to the lateral walls 3,4 and has a preferably cylindrical extension along a longitudinal direction X-X between said lateral walls 3,4. In particular, the through channel 5 has a diameter DM between 5 and 15 mm, preferably 10 mm.

The through channel 5 acts as a seat for a hub M with a diameter preferably coinciding with the diameter of the channel 5. The hub M is rigidly keyed coaxially into the through channel 5. In one variant, the hub M is keyed idle into the through channel 5 and is free to rotate around its own axis.

In a variant, the central body 2 can comprise a pocket 5a which extends vertically along a direction Y-Y perpendicular to the longitudinal direction X-X with preferably rectangular extension and in communication with the through channel 5 for housing a thrust spring 30 acting on the hub M.

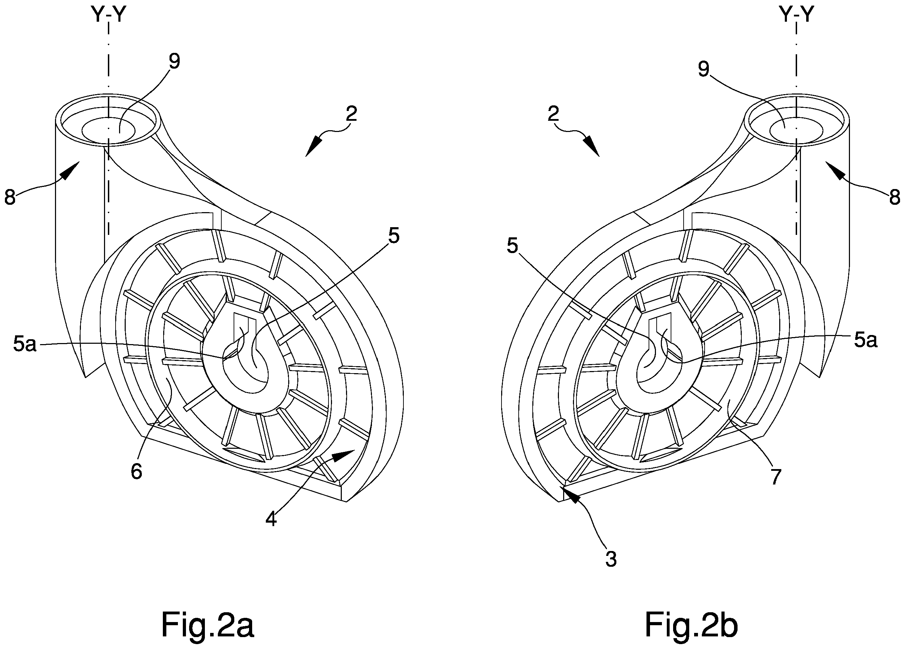

As shown in the example of Figures 2a, 2b, the central body 2 comprises an extending element 8 having a cylindrical cavity 9 extended by a predetermined length along the perpendicular direction Y-Y. The cylindrical cavity 9 is adapted to receive an assembly pin P which is extended, in use, vertically along the perpendicular direction Y-Y. The pin P is intended for the pivoting connection of the twin wheel 1 to a supporting device (not shown).

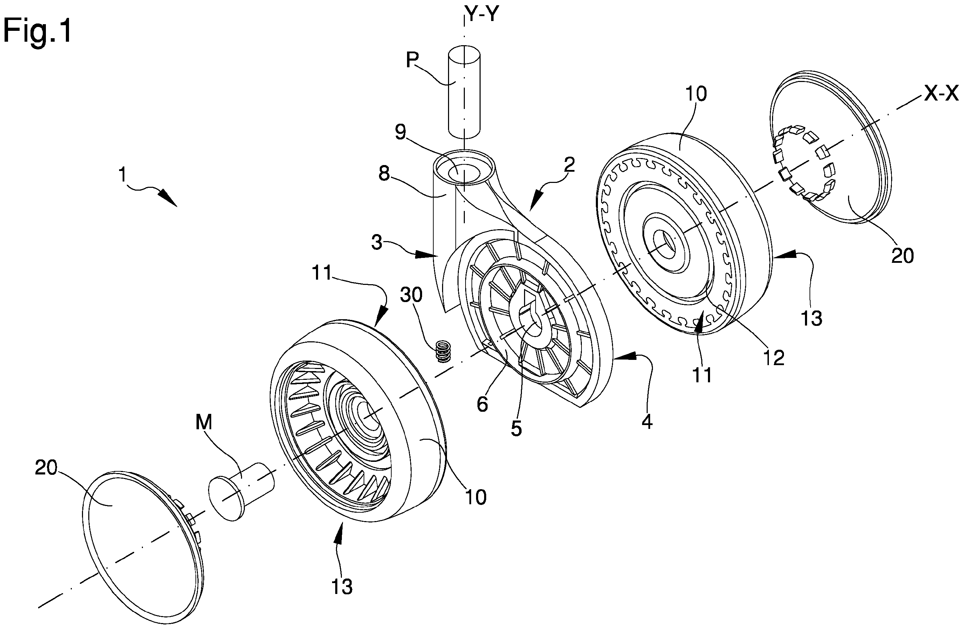

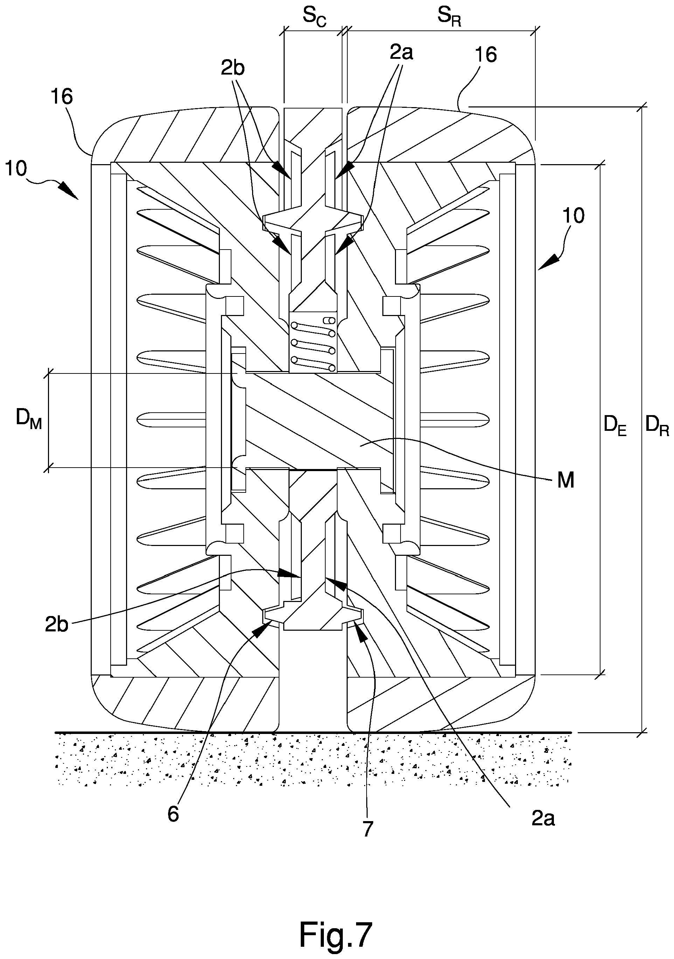

The twin wheel 1 comprises a pair of rollers 10 connected in a revolving manner to one another by means of the hub M. As shown in the example of Figure 1, the rollers 10 have a substantially cylindrical shape and have each an inner side 11 and an outer side 13. The inner side 11 is the side of the roller 10 which, in use, faces one of the lateral walls 3 or 4 of the central body 2. As shown in the example of Figure 7, in the assembled configuration the rollers 10 are oriented back to back and separated from the central body 2.

In the rest of the present description and in the following claims, when referring to the rollers 10 reference can be made indistinctly to one or the other roller the latter being, preferably, of substantially identical shape and dimensions. Similarly, with reference to the lateral covering discs, reference can be made indistinctly to one or the other lateral disc, the latter being, preferably, of substantially identical shape and dimensions.

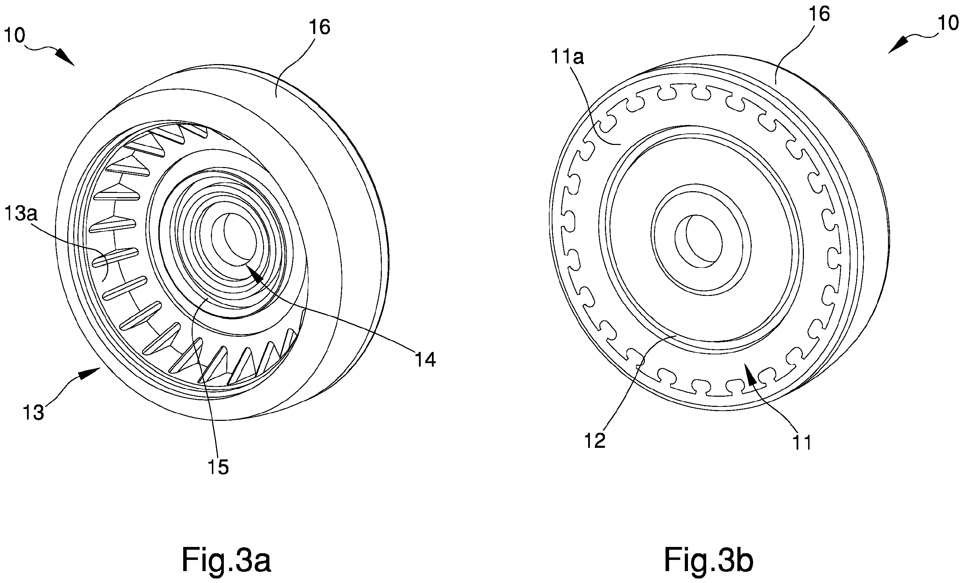

As shown in the examples of Figures 3a, 3b, the inner side 11 of the roller 10 comprises a surface 11a with a substantially flat extension. Conversely, the outer side 13 of the roller 10 has a surface 13a with a substantially concave profile with concavity facing its inner side 11.

The outer side 13 of the roller 10 also has an anchoring flat surface 14 for anchoring the hub M from which the concave surface 13a extends.

The inner side 11 of the roller 10 has an annular seat 15 to receive lateral covering discs 20 as described in detail in the remaining part of this description. In particular, the annular seat 15 comprises a circular recess obtained in the flat surface 14 around the through channel 5.

As illustrated in the example of Figure 7, the roller 10 has a diameter D_{R} comprised between 50 mm and 100 mm, preferably 65 mm and a thickness S_{R} comprised between 10 mm and 30 mm, preferably 20 mm. The total thickness of the twin wheel 1 in accordance with the present invention is comprised between 30 mm and 60 mm, preferably 46 mm, ensuring the realization of an extremely compact twin wheel.

Advantageously, with reference to the examples shown in the Figures 2A, 2B, each of the lateral walls 3,4 of the central body 2 has a protective annular element 6,7 overhanging transversely along the direction X-X orthogonal to said lateral walls 3,4. As described in detail in the present description, the protective annular elements 6,7 of the central body 2 act as a protection for the hub M since they are intended to fit, by shape mating, into corresponding annular recesses 12 formed in the rollers 10.

The protective annular element 6,7 has a hollow cylindrical shape and is in a radial position comprised between the extending element 8 and the through channel 5 of the central body 2. In particular, the protective annular element 6,7 has a diameter D comprised between 30 mm and 50 mm, preferably 40 mm. According to a preferred embodiment, the protective annular element 6,7 projects from the lateral walls 3,4 of the central body by a distance comprised between 0.5 mm and 3 mm, preferably 1 mm.

With reference to the example shown in Figure 7, the central body 2 has a substantially continuous cross-section profile with opposite depression zones 2a,2b comprised around the protective annular element 6,7.

Advantageously, as shown in the examples of Figures 2A, 2B, the protective annular element 6,7 has an outer straight conical revolution surface.

With reference to the example of Figure 3B, the annular recess 12 of the roller 10 is obtained at its inner side 11. This way, when the rollers 10 are mounted on the hub M and positioned alongside with the central body 2, each projecting protective annular element 6,7 is inserted in the annular recess 12 by shape mating. In point of fact, the annular recess 12 acts both as a protection against dirt by preventing this from penetrating inside the wheel 1 towards the hub M, and as an additional guide for the protective annular element 6,7 during the rotation of the rollers 10 with consequent greater overall stability of the twin wheel 1.

In one version, the twin wheel 1 comprises a pair of cylindrical casings 16 each adapted to be fitted on a respective roller 10 for covering the roller itself. The cylindrical casing 16 is advantageously interchangeable and is preferably made of a polymeric material, e.g. rubber.

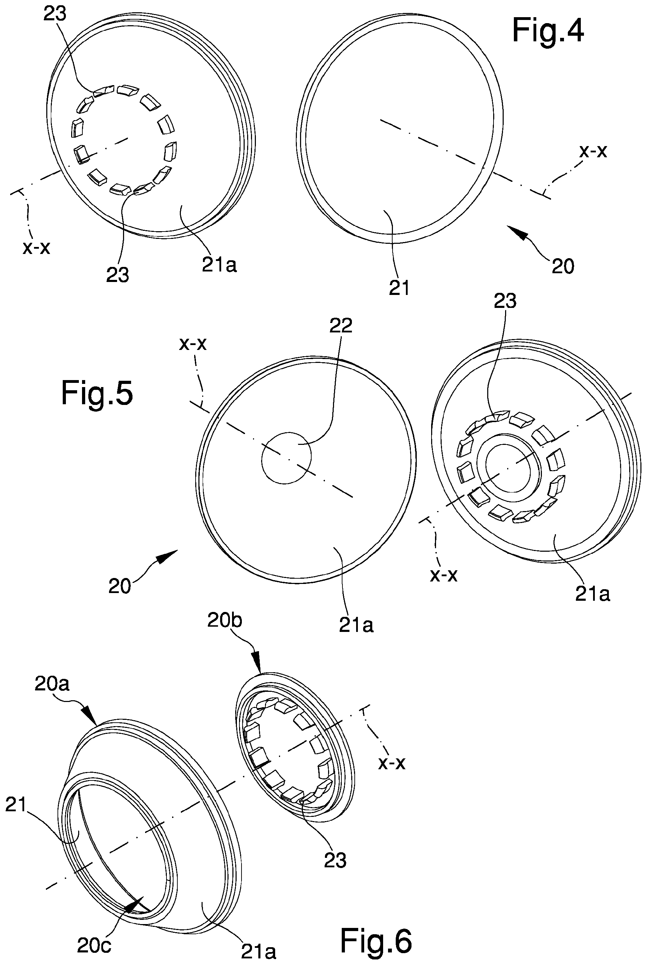

As shown in the examples in Figures 4 to 6, the twin wheel 1 advantageously comprises interchangeable lateral covering discs 20 connectable to the annular seat 15 of the roller 10 in order to cover and at the same time protect the outer side 13 of the rollers 10 from both dirt and possible impacts.

In accordance with the first embodiment shown in Figure 4, the lateral covering discs 20 have an outer covering surface 21, preferably of substantially lenticular shape. Preferably, the outer covering surface 21 has a substantially convex-concave lenticular shape with concavity facing, in an assembly configuration, the hub M of the twin wheel 1. On the opposite side of the covering surface 21 attachment elements 23 are provided locked together with an inner covering surface 21a.

Preferably, the attachment elements 23 are arranged in a circular pattern and comprise a plurality of teeth projecting transversely along a direction parallel to the axial direction X-X of the lateral covering disc 20. Preferably, the number of attachment elements 23 is not less than twelve.

In a variant illustrated in the example of Figure 5, the lateral covering discs 20 have a flat surface 22 substantially orthogonal to the axial direction X-X and from which the outer covering surface 21 extends.

In accordance with a second embodiment shown in Figure 6, the lateral covering discs 20 have a hollow body 20a and a plug 20b that can be coupled together.

The hollow body 20a has an annular outer covering surface 21 preferably tapered and intended to receive, by shape mating, the plug 20b, the latter being intended to cover the hole 20c of the hollow body 20a. The plug 20b is equipped with attachment elements 23 arranged in a circular pattern and comprising a plurality of teeth projecting transversely along the direction X-X so that the plug 20b closes the hollow body 20a when coupled to the attachment seat 15 of the roller 10. As described for the first embodiment, the number of attachment elements 23 is not less than twelve.

In both embodiments, the attachment elements 23 are intended to be coupled in a removable manner with the annular seat 15 of the roller 10. Advantageously, the coupling is of the snap type by interference in order to facilitate and speed up the attachment/release operations of the lateral covering discs 20 to/from the rollers 10. Preferably, the attachment elements 23 are arranged around a circumference of diameter comprised between 10 mm and 20 mm, preferably 15 mm.

As it has been possible to determine from the present description, it has been ascertained how the described invention achieves the proposed objects and in particular the fact is underlined that by means of such twin wheel it is possible to avoid the penetration of foreign bodies inside the same, keeping the hub clean and ensuring characteristics of silent running of the wheel over time. Moreover, thanks to the particular conformation of the central body, the efficient smooth running of the rollers is maintained inasmuch as the dirt is blocked outside the protective annular elements.

## Claims

1. Twin wheel (1) to prevent the penetration of foreign bodies comprising:
- a central body (2) intended to be coupled to a supporting device and comprising two opposed lateral walls (3,4) extending on parallel planes and between which a through channel (5) is positioned,
- a pair of rollers (10) connected in a revolving manner to one another by means of a hub (M) keyed in said through channel (5), the pair of rollers (10) having each an inner side (11) facing the lateral walls (4,5) of the central body (2),
**characterized by** the fact that
each of the lateral walls (3,4) of the central body (2) has a protective annular element (6,7) coaxial to said through channel (5) and overhanging transversely along a longitudinal direction (X-X) orthogonal to the plane of extension of said lateral walls (3,4) and towards each roller (10), and that
each inner side (11) of the rollers (10) has an annular recess (12) adapted to receive, by shape mating, said protective annular element (6,7).

2. Twin wheel (1) according to claim 1, wherein the central body (2) has a substantially discoidal shape and is provided with an extending element (8) having a cylindrical cavity (9) adapted to receive an assembly pin (P) which is extended, in use, along a vertical direction (Y-Y) for the pivoting connection to said supporting device.

3. Twin wheel (1) according to claim 1 or 2, wherein the protective annular element (6,7) is in a radial position comprised between the extending element (8) and the through channel (5).

4. Twin wheel (1) according to any one of claims 1 to 3, wherein the protective annular element (6,7) has an outer straight conical revolution surface.

5. Twin wheel (1) according to any one of claims 1 to 4, wherein each roller (10) has an outer side (13) opposite the inner side (11), the outer side (13) comprising an anchoring flat surface (14) for anchoring the hub (M) on which an annular seat (15) is formed.

6. Twin wheel (1) according to claim 5, comprising interchangeable lateral covering discs (20) connectable to said annular seat (15) to cover the outer side (13) of said rollers (10).

7. Twin wheel (1) according to claims 5 and 6, wherein said lateral covering discs (20) have an outer covering surface (21) of substantially lenticular shape.

8. Twin wheel (1) according to any one of claims 5 to 7, wherein said outer covering surface (21) has a substantially convex-concave lenticular shape.

9. Twin wheel (1) according to claim 7 or 8, wherein said lateral covering discs (20) have a flat surface (22) substantially parallel to said anchoring flat surface (14) and from which said outer covering surface (21) extends.

10. Twin wheel (1) according to claim 9, wherein said flat surface (22) is separated from said covering surface (21).

11. Twin wheel (1) according to any one of claims 6 to 10, wherein said lateral covering discs (20) comprise attachment elements (23) which can be coupled in a removable manner to the annular seat (15) of the roller (10).

12. Twin wheel (1) according to claim 11, wherein the attachment elements (21) are formed internally in said flat surface (22).

13. Twin wheel (1) according to any one of claims 1 to 11, comprising an interchangeable cylindrical casing (16) for covering said rollers (10).
